(19) Europäisches Patentamt

European Patent Office

Office européen des brevets

(11) **EP 0 896 209 A2**

(12) **EUROPEAN PATENT APPLICATION**

(43) Date of publication:
**10.02.1999 Bulletin 1999/06**

(51) Int. Cl.⁶: **G01H 1/00**

(21) Application number: **98114291.2**

(22) Date of filing: **30.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **31.07.1997 IT TO970688**

(71) Applicant:
**FINMECCANICA S.p.A. AZIENDA ANSALDO 16128 Genova (IT)**

(72) Inventor:
**The designation of the inventor has not yet been filed**

(74) Representative:
**Cerbaro, Elena et al
STUDIO TORTA S.r.l.,
Via Viotti, 9
10121 Torino (IT)**

(54) **Method for evaluating the reliability of a trend analysis, effected by means of the Kriging technique on an operating quantity of machinery, indicative of the presence of defects in the machinery itself**

(57) The method comprises the steps of: acquiring (100) a current value of an operating quantity of the machinery; calculating (101) a first estimated value of the operating quantity by means of the Kriging technique assuming that the local trend of the values of the operating quantity is linear; calculating (140) a first error value on the basis of the current value and the first estimated value of the operating quantity; comparing (160) the first error value with at least one first predetermined threshold value; accepting (170) the first estimated value of the operating quantity whenever the first error value has a first predetermined relationship with the first predetermined threshold value; calculating (200) a second estimated value of the operating quantity by means of the Kriging technique assuming that the local trend of the values of the operating quantity is constant whenever the first error value does not have the said first predetermined relationship with the first predetermined threshold value; calculating (140) a second error value on the basis of the current value and the second estimated value of the operating quantity; comparing (160) the second error value with at least one second predetermined threshold value; and accepting (170) the second estimated value of the operating quantity whenever the second error value has a second predetermined relationship with the second predetermined threshold value.

Fig.1

## Description

The present invention relates to a method of evaluating the reliability of a trend analysis effected by means of the Kriging technique on an operating quantity of machinery, indicative of the presence of defects in the machinery itself.

In particular, the following description will refer, without loss of generality thereby, to the evaluation of the reliability of a trend analysis effected by means of the Kriging technique on the vibrations of rotating machinery for electrical power installations.

In general, however, the Kriging method can be utilised in all cases in which a statistical and/or dynamic quantity can be expressed as a function of a certain number of independent quantities represented by operating parameters of the machinery (for example, active power, reactive power, temperature of the machinery, pressure, etc.).

For example, the Kriging method can also be utilised to obtain information on the state of insulation of the machinery by monitoring the partial discharges which take place in it.

As is known, the vibrational behaviour of machinery of the above indicated type must be constantly monitored along the axis line, preferably at bearings and particular critical zones, such as, for example, the terminals of the electrical windings of the generator, for the purpose of testing for the presence of malfunctions and/or defects and to follow their evolution over time.

The vibrational behaviour of a machine is given substantially by the contribution of two terms: the first determined by the operating conditions of the system, and a second contribution determined by malfunctions and/or defects, which, for machinery operating in optimum conditions, is null or in any event negligible.

The objective of any type of trend analysis is the evaluation of the difference between the measured value of the monitored quantity and its expected value, for the purpose of identifying malfunctionings and/or defects in good time.

The variability of the operating conditions of the machinery introduces a natural variation in the measured vibrations with possible masking effects on the comparison of variations introduced by defects and/or malfunctions; therefore the predictive analysis techniques must be able to discriminate variations correlated to operating conditions from others.

There are substantially three techniques most commonly utilised for trend analysis:

- The first known technique consists substantially in a division of the operating conditions into pre-determined ranges, in the definition of acceptable vibration levels in the different operating ranges, in detection of the vibrations and parameters representative of the operating conditions and in monitoring them over time to establish the variation of the vibrations. Differences between the expected value and the measured value are not determined but the identification of a potential defect is based substantially on the increase in the measured value of the monitored quantity; the range of variation assigned to the vibrations is rather wide in order to take into account the uncertainties and could not allow an early identification of a potential defect;

- The second known technique consists substantially in a definition of a mathematical model of the multi-regressive type (in general linear) which makes it possible to estimate the level of vibrations with a high degree of confidence. Putting the model into practice requires a very large number of measurements to obtain a high degree of statistical confidence. It is to be borne in mind that in general it is preferable to sub-divide the range of operating conditions into narrower ranges and operate with several multi-regressive models; and

- The third known technique consists substantially in the use of neural networks and this approach requires the availability of a significant database which involves the whole operating range of the machine in the learning phase for the purpose of identifying the model with a high degree of statistical confidence.

All the said techniques have, however, disadvantages tied to the phases of commencement and use, and in particular, for the first technique described, to the division of the operating conditions into subsets, to the definition of the acceptable vibration level and to the empirical nature of the performance of the trend analysis, and as far as the other techniques described are concerned, to the necessity of having available a wide, valid database (obtained with machines free from defects/malfunctionings) for the identification, verification and/or learning of the analytical model.

Maintenance operations on machinery having components which can influence the monitored quantity involve at least a partial reconstitution of the database used for reference before continuous monitoring can be reinstated.

It must further be borne in mind that in some applications several operating parameters vary seasonally (summer/winter) or with a period tied to natural events (for example the filling level of a reservoir supplying a hydroelectric generation unit) so that acquiring the reference database takes a long time.

More recently, the Kriging technique has been used for the performance of such trend analysis, a complete treatment of which is set out for example in the text "Mining Geostatistics" by A.G.Journel and CH. J. Huigbregrs, edited by Academic Press, London, 1978, and in the text "Krigeage et Splines en Cartographie Automatique - Application a des Examples Petroliers", by O. Dubrele, Doctoral Research Thesis, Ecole Nationale Superior des Mines de Paris, 1981.

The main characteristics of the Kriging technique can be summarised as:

- Use of a modified linear regression technique;
- Estimation (prediction) of the value of a point assuming that it is related (spatially) to known points in a region surrounding the working point (operating conditions of the monitored machine);
- Estimation (prediction) calculated by the weighted sum of known values; the weightings are chosen in such a way as to minimise the variance of the error;
- Estimation (prediction) based on the choice of a restricted configuration of the working points of the machine; for each new estimation there is selected (automatically) a quite "restricted" region around the working point; to some extent this takes account of the non-linearity in that it effects a linearisation in a restricted region of the current operating conditions;
- Evaluation of the difference between the predicted value and the observed value with consequent acceptance of the observed value if the difference lies within pre-determined limits of error and answering to defined acceptance criteria.

The current observed value, if accepted, is added to the database and in this way the reference database (representing the starting point for the performance of a new estimation) is incremented over time.

If, on the other hand, the observation is not acceptable, the subsequent observations (and estimations) must confirm the phenomenon (short term trend) to exclude possible transient effects.

The advantages of the Kriging technique can be summarised as follows: it is not necessary to have available a reference database to identify the model; the model is immediately operative (once having two measurements one can proceed to estimation of the third); the number of measurements necessary to effect the estimation is small; the estimations are effected by selecting measurements relating to operating conditions close to the conditions of the current measurements; the estimation is accurate and measurements errors can be taken into account; the model follows the monitored system without adapting itself to it; and it allows immediate monitoring of machines in which some operating parameters have seasonal variations and/or long periods in that the reference database is incremented over time.

Moreover, the Kriging technique has other characteristics which can be listed after having clarified what meanings are assumed in this art by the term "regionalised variable", "random function", "trend" (or "drift"), and "local trend" (or "local drift").

In particular a distributed variable Y in a K-dimensional space D, defined by $X_j$ with j=1...K is the said "regionalised variable" - ReV; this definition does not include any probabilistic interpretation but is a function which considers a value at any point in the K-dimensional space D. A regionalised variable ReV can be considered a particular realisation of a set of random variables RVY (D); this set is called a "random function"; this latter expresses the random and functional aspect of a regionalised variable.

Moreover, a regionalised variable (RV) can be considered to be composed of two terms: the first, known as the "trend" or "drift" is a function of the independent variables constituting the domain (region in which they belong) of the regionalised variables and represents the average (or expected) value of the regionalised variable RV: the second known as the "residual" term, is not a function of the independent variables and represents the chance component of RV (its average is nil).

In particular, within the ambit of the Kriging technique, the "trend" or "drift" of a regionalised variable $Y(P)$, with $P$ belonging to a domain $D$, the average (expected) value of the regionalised variable $Y(P)$ in the domain considered is defined; however, by studying a more restricted field around $P$ (sub-domain) one talks of "local trend" or "local drift". The concept of trend (global or local) is therefore tied to the extent of the region around the point P under consideration.

In the application to which this description refers, for the estimation of the current value of the observed variable, there are taken into consideration only measurements $Y(P_i)$ (accepted) which fall in a restricted region of P, from which the use of the term "local trend" or "local drift" arises.

Moreover, attention is focused on the fact that in the following description the terms "trend" or "local trend" (drift) of the values assumed by the monitored quantity of the machinery and the "trend analysis" ("data trend") of the values assumed by the monitored quantity have completely different meanings from one another and therefore are not in any way to be confused. In fact, the first ("trend" or "local trend") are terms typical of the terminology utilised in the Kriging technique and have the very precise mathematical meanings widely described here and above, whilst the second ("data trend") remains solely to indicate an analysis between observed values and estimated values in longer or shorter time spans.

To illuminate the above-mentioned considerations, the further characteristics of the Kriging technique can be summarised thus:

- The estimation is effected in a restricted region of the dynamic configuration of the analysed points which are treated as regionalised variables; these latter have a random and irregular aspect as well as a general structural aspect requiring a certain functional representation. Moreover, each region is analysed for the purpose of determining a correlation and an inter-dependence between the regionalised variables;
- It permits calculation of the local and global characteristics of the data in such a way as to consider the (average) trend thereof, and/or other possible anomalies in the data;
- The "ordinary Kriging" exists in which the average or value of the drift of the data in the region (domain) considered (working field) is not known, but is assumed to be stationary throughout the working range considered;
- The "universal Kriging" exists in which the (average) drift is not known but is assumed to be not stationary throughout the region (domain) considered.

The use of the method for monitoring the operating state of machinery of the above-described type has therefore lead to the requirement to have available a method which allows evaluation of the reliability of the trend analysis effected by means of the Kriging method.

The object of the present invention if therefore that of providing a method for evaluating the reliability of the estimations effected using the Kriging methods.

According to the present invention there is provided a method for evaluating the reliability of a trend analysis effected by means of the Kriging technique on an operating quantity of machinery indicative of the presence of defects in the machinery itself, characterised in that it comprises the steps of:

a) acquiring a current value of the said operating quantity;

b) calculating a first estimated value of the said operating quantity by means of the said Kriging technique by assuming that the local trend of the values assumed by the said operating quantity is linear;

c) calculating a first error value on the basis of the said current value and the said first estimated value of the said operating quantity;

d) comparing the said first error value with at least one predetermined threshold value;

e) accepting the said first estimated value of the said operating quantity whenever the said first error value has a first predetermined relationship with the said first predetermined threshold value;

f) calculating a second estimated value of the said operating quantity by means of the said Kriging technique, assuming that the local drift of the values assumed by the said operating quantity is constant whenever the said first error value does not have the said first pre-determined relationship with the said first pre-determined threshold value;

g) calculating a second error value on the basis of the said current value and the said second estimated value of the said operating quantity;

h) comparing the said second error value with at least a second predetermined threshold value;

l) accepting the said second estimated value of the said operating quantity whenever the said second error value has a second predetermined relationship with the said second predetermined threshold value.

For a better understanding of the present invention a preferred embodiment will now be described, purely by way of non-limited example with reference to the attached drawings, in which:

- Figure 1 illustrates a block schematic diagram relating to a first embodiment of the method forming the subject of the present invention;
- Figure 2 is a block schematic diagram relating to a second embodiment of the method forming the subject of the present invention.

To describe the method according to the present invention it is necessary first briefly to describe the fundamental principles of the Kriging method, which can be deduced from the complete description reported in the above mentioned texts.

It is important initially to make several observations on the concepts of regionalised variable and random function introduced above.

As previously mentioned, a regionalised variable ReV can be considered a particular realisation of a set of random variables called a random function and this latter expresses the random and functional aspect of a regionalised variable.

Locally, by considering a certain point $P_i$ of the K-dimensional space $D$, $Y(P_i)$ is a random variable but is also a random function because, for each pair of points $P_i$ and $(P_i+h)$ the corresponding values $Y(P_i)$ and $Y(P_i+h)$, relating to a set of regionalised variables $RV$ are not independent but are connected together through a correlation which expresses the spatial structure of the regionalised variables $Y(P)$.

The variability between $Y(P)$ and $Y(P+h)$ is given by the function $2G(P,h)$ expressed thus:

$$2.G(P,h)=E\{[Y(P)-Y(P+h)]^2\}$$

in which $G(P,h)$ is the variogram.

The said variability is a function of the point P and the vector $h$.

Estimation of the variogram requires different pairs of values of the random variables $(Y(P); Y(P+h))$; in practice only a limited number of pairs of values can be utilised and, moreover, the variogram depends on the vector h and not on the position $P$; this later hypothesis leads to a stationariness of the second order for which we can observe that:

- The mathematical probability $E[Y(P)]$ exists and does not depend on the point $P$;
- For each pair of regionalised variables $Y(P)$ and $Y(P+h)$ the covariance exists and depends on the vector $h$;
- The variogram and the covariance are two equivalent instruments able to characterise the autocorrelation between two variables;
- The covariance decreases with an increase in the distance h and vanishes for large values of h.

**DESCRIPTION OF THE THEORY**

The object of the "ordinary Kriging", characterised by a stationary trend (or average) value is the calculation of $Y$ [an unknown value of a random function $RV$] in a certain, known, position $P$ belonging to a set of points $P_i$ of the domain $D$, for which the value of $RV$, $[Y(P_i)]$ is known. The relationship utilised is as follows:

$$\hat{Y}(P)=\sum W_i \cdot Y_i(P_i)$$

in which $\hat{Y}(P)$ is the estimated value, $Y(P_i)$ are the regionalised variables (real values) defined in the K-dimensional domain $D$, $W_i$ are the weightings (coefficients) which allow the expression to be written by "weighting the influence of the points close to one another.

The optimum weightings are obtained by utilising the following relations:

$$E(Y-\hat{Y})=0 \ : \ \text{average value;}$$

$$E[(Y-\hat{Y})^2]: \ \text{the variance of the estimation error is}$$

$$\text{a minimum.}$$

As far as the first condition is concerned, we observe that in the "ordinary Kriging" the trend is assumed constant in the domain $D$ and, therefore, for the weightings there is obtained:

$$\sum W_i = 1$$

As far as the second condition is concerned, it is obtained by minimising the error in the estimated variance represented by the expression:

$$\sigma^2 = 2 \cdot \sum W_i \cdot K(P_i, P) - K(P_i, P) - \sum \sum W_i \cdot W_j \cdot K(P_i, P_j)$$

in which $K(P_i, P)$ is the covariance between the points; it is a function of the vector $h$, representing the distance between the points and can be expressed as $K(H_{ip})$ by means of the equation:

$$\sum W_i \cdot K(H_{ij}) + C_0 = K(H_{ip})$$

in which $C_0$ is the Lagrange coefficient of the system.

In matrix form one obtains:

$$\left| \begin{array}{cc} K(H_{ij}) & \{1\} \\ \{1\} & 0 \end{array} \right| \cdot \left\{ \begin{array}{c} \{W_i\} \\ C_0 \end{array} \right\} = \left\{ K(H_{ip}) \right\}$$

By utilising this equation it is possible to determine the Lagrange coefficient $C_0$ and the weighting $W_i$.

We observe that, since the local trend is stationary in the "ordinary Kriging", the average is given only by $C_0$ for all the points considered ($C_0$ is recalculated for each point considered).

In the "universal Kriging" it is assumed that the local trend in the data exists; the said trend at point $P$ is expressed by the formula:

$$m(P) = E\left[ Y(P) \right] = \sum C_j \cdot F_j(P)$$

where m(p) is the average, $F_j(P)$ are the functions of the local difference, $C_j = (K+1)$ are unknown coefficients.

The simplest form to express the trend or drift is the polynomial of the first order (linear trend):

$$m(P) = C_0 + \sum C_j \cdot X_j(P)$$

deriving from the following conditions:

$$E\left[ \sum Y(P_i) - C_0 - \sum C_j \cdot Xj(P) \right] = 0$$

The said condition provides $(K+1)$ equations. The other equations are given by the condition of minimum error in the estimated variance; in the form of the matrix:

$$\left| \begin{matrix} [K] & [X]^T \\ [X] & [0] \end{matrix} \right| \cdot \left\{ \begin{matrix} \{W_i\} \\ \{C\} \end{matrix} \right\} = \left\{ \begin{matrix} \{Y\} \\ \{X(P)\} \end{matrix} \right\}$$

The significance of the symbols is as follows:

[K] : covariance matrix
[X] : matrix of the co-ordinates of the measured value in the domain D; the first column is 1; it is a (N, K+1) matrix:
$[X]^T$ : transposition of [X]
$\{W_i\}$: vectors representing the weighting coefficients;
{C} : a vector [(K+1), 1] which expresses the co-ordinates of the point P in the domain D; the first row is 1.

The solution of the system composed of (K+1) and N equations quoted above provides N weighting coefficients $W_i$ as well as (K+1) Lagrange coefficients $C_j$.
Finally, it is necessary to consider that the values $Y(P_i)$ in $X(P_i)$ are affected by errors; therefore the measured values can be expressed thus:

$$Y(P) = Z(P) + \varepsilon(P)$$

in which $\varepsilon(P)$ has a zero average and is not correlated from one data point to the other and, therefore:

$$E\left[\varepsilon(P)\right] = 0$$

$$E\left[\varepsilon(P_i) \cdot \varepsilon(P_j)\right] = \sigma \cdot \delta_{ij} \quad (\sigma = \text{variance or scatter}).$$

We observe that:

$$\delta_{ij} = 0 \quad \text{if } i \neq j$$

$$\delta_{ij} = 1 \quad \text{if } i = j.$$

The Kriging system defined by taking account of the error $\varepsilon$ is as that previously defined, but the covariance matrix includes the term $\sigma \cdot \delta_{ij}$.

## KRIGING AS INTERPOLATOR

For a certain set of points $X(P_i)$ the weightings $W_i$ depend on N functions representing the covariance and (K+1) coefficients representing the average plane or hyperplane, depending on whether a stationary or non-stationary (linear) trend is under consideration.
If the local trend of values assumed by the regional variable Y is not stationary (linear) the value at a certain point P of the regional variable Y itself can be written in the following form:

$$Y(P) = C_0 + \sum C_j \cdot X_j + \sum W_i \cdot K(H_{ip})$$

where the term:

$$C_o + \sum C_j \cdot X_j$$

represents just the non-stationary local trend, and the term:

$$K(H_{ip}) = \sum_{m=0}^{t} (-1)^{m+1} \cdot b_m \cdot |h_{ip}|^{(2m+1)}$$

represents only the generalised covariance function (in which $t$ represents the order of the trend).

If, on the other hand, the local trend of the values of the random variable $Y$ is stationary (constant), the value assumed at a certain point $P$ of the random variable $Y$ itself can be written in the following form:

$$Y(P) = C_0 + \sum W_i \cdot K(H_{ip})$$

2)

in which $C_0$ represents only the stationary local trend.

Therefore, in summary, if it is assumed that the local trend of the values of the random variable Y are not stationary, this local trend is expressed by a polynomial function of the selected independent variables X, whilst if it is assumed that the local trend of the values of the random variable Y is stationary, this local trend is expressed by means of a monomial.

Kriging is an exact interpolator; this means that the interpolator passes exactly through the points $Y(P_i)$.

If the measurement error is considered the preceding function $K(H_{ip})$ becomes:

$$K(H_{ip}) = A_0 \cdot \delta + \sum_{m=0}^{t} (-1)^{m+1} \cdot b_m \cdot |h_{ip}|^{(2m+1)}$$

with $\delta = 1$ for $i = p$; $\delta = 0$ for $i \neq p$.

Considering the presence of the measurement error, the Kriging system is exactly the same but, since the measurements $Y(P_i)$ are not equal to the current values $Z(P_i)$, the interpolator of $Y(P_i)$ does not pass exactly through $Y(P_i)$.

The $K$-dimensional domain $D$ represents a hyperplane of independent variables with a different degree of variability and with different measurement units; therefore, in the resolution of the Kriging system, normalised co-ordinates and normalised distances of the vector $h$ are adopted; moreover, the covariance matrix is also in the form of generalised covariance (it is necessary to remember that the terms of the covariance are a function only of the distance between the points represented by the vector $h$).

From the structure of the interpolator it is possible to observe the following:

- the local trend is associated with the plane (hyperplane) defined starting from a sample of defined values;
- the product of the weightings and the generalised covariance represents the influence of the measurements on the interpolated value;
- measurements at a greater distance $h$ between interpolated points has a lesser influence (or, at the limit, 0 zero influence) in comparison with that of closer points;
- in the presence of a wide scattering of data within the defined domain, only the data located in the region of the interpolated point has any importance; with the consequence that only a region around the point can be considered to resolve the Kriging system (reduction in the number of equations).
- the distribution of the estimation error of the variantce o is assumed to be equal to about 95% of the Gaussian confidence interval $(2\sigma)$;
- the true value $Z(P)$ can be estimated as $Y(P)\pm 2\sigma$.

## PERFORMING TREND ANALYSES UTILISING KRIGING TECHNIQUES

The performance of the Kriging method requires:

- taking measurements relating to the dependent variable $Y(P)$ (monitored operating quantity of the machinery) and to the operating conditions $X_j$;
- the automatic choice of a restricted region of the domain of $P$ and the corresponding values $Y(P_i)$;
- calculation of the covariance between the points $P_i$;
- calculation of the covariance between the points $P$ for which $Y(P)$ must be estimated and the available points $P_i$;
- solution of the system of linear equations for the purpose of determining the weighting $W_i$ the Lagrange coefficients $C_j$.

For the purpose of obtaining a rational solution the aspects quoted at the following points must be considered:

- calculation of the covariance: this can be calculated starting from experimental data or models simulating a generalised covariance, the optimum choice of which is one of the fundamental aspects which can influence the results and have a significant influence on the machine time (calculation time);
- form of the local trend: in fact, in the description of the method, constant or linear local trends have been considered but Kriging can also consider quadratic or cubic functions;
- reduction in the dimension of the Kriging system, by performing the estimate on data considered in correspondence with a certain position $\{X(P)\}$, and by considering the distance vector h less than or equal to a certain selected value $R_0$ (for example, simulating a system utilising the same operating conditions for a long time) or by regrouping the available data (medium to long term analysis);
- preparation of a file classifying and organising the data within it; the said file allows rapid access for the utilisation of that data required to solve the Kriging system with a minimum of intermediate calculations;
- adoption of efficient algorithms for the solution of the Kriging system;
- comparison between estimation and observation (current measurement) with acceptance or rejection of the observation;
- analysis of short term trend to confirm that the non-accepted observation is an indication of possible malfunction and/or defect

## KRIGING MODEL

In accordance with criteria defined by the previously described Kriging technique, a database was generated; the data are represented in this latter with $\{Y\}$ (vector of the measured vibrations) and with $\{X\}$ (the matrix corresponding to the operating conditions); in particular, it is possible to make the observations listed at the following points:

- for each variable $X_i$ the operating range is defined and the maximum and minimum values are selected for the purpose of effecting normalisations;
- the variables (quantities) representing the operating conditions are normalised for the purpose of obtaining:

$$X_{ij} = \frac{(X_{ij} - X_{j_{min}})}{X_{j_{max}} - X_{j_{min}}}$$

with j=1...K

We can assume that the minimum value is equal to 0 and the maximum value is equal to 1 (or -1 and 1 respectively for variables having a sign);

- assignation of the corresponding vector $H_j$ to the variable $Y_j$;
- reorganisation of the data so as to order $Y_j$ in accordance with increasing values of $H_j$;
- calculation of the distances between the pairs of sequential values ($D_{hj}$);
- determination of the minimum value of $D_h(D_{hmin})$.

Procedures based on the application of (experimental) semi-variograms are applicable only if a constant trend is present over the whole domain; if the trend is not constant the procedure can be modified to consider the non-stationariness.

By subtracting the trend from the variable the residue $Z_j = Y_j - m$ has zero local average and it is possible to calculate the semi-variograms.

The form of the trend cannot be assumed to be the same over the whole operating range, but changes according to the different sub-domains into which this latter can be sub-divided.

Bearing in mind what is explained above, the generalised co-variance is utilised in the application of the method, which makes it possible to proceed without having information on the structure of the data available, does not require operations for estimation of the trend and for subtraction of this from the dependent variables under examination, and allows the estimation of the expected value (a function of the operating parameters) to be effected starting from a minimum amount of data.

The further advantages which can be obtained with the Kriging technique are: it is not necessary to have a reference databank ("baseline") but it is possible to increment the different variables over time in that, in a first time period, a minimum quantity of data may be available and therefore the number of points necessary to perform the estimation is reduced; it is possible to utilise a series of criteria adapted to allow acceptance of the measurement as well as prediction of the evolution of the quantities in the short, medium and long term; interpolation within the $K$-dimensional domain provides a more precise estimation than that which can be obtained with other methods; the estimation is very accurate and takes account of the precision of the measurement and the scattering associated with it is reduced in that a large amount of data can be considered in a limited domain and, moreover, the measurement errors can be easily estimated; the influence of each operating mode on the estimated value can be evaluated (local and global); the model is immediately operative, in fact, as whenever two points have been determined the others can be quickly estimated.

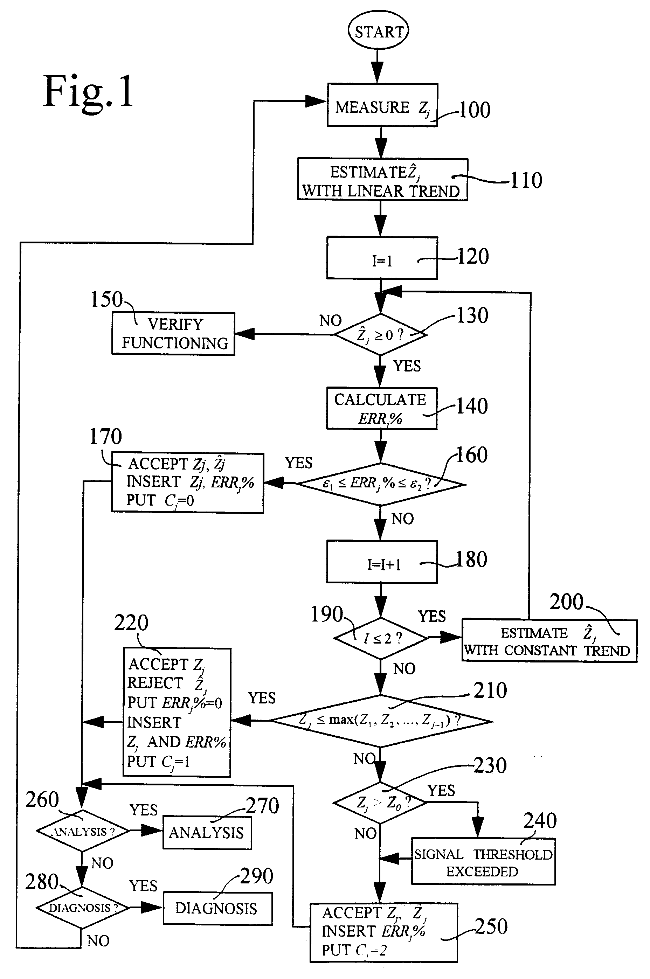

In the light of what is described above, a first embodiment of the method for evaluating the reliability of the trend analysis effected with the Kriging technique forming the subject of the present invention will now be described with reference to the flow diagram illustrated in Figure 1.

In particular, the operations described with reference to Figure 1 are repeated cyclically for the continuous monitoring of the machinery and each of the repetitions will be indicated in the description with the suffix "j". Moreover, in the following description reference will be made to an operating quantity of the monitored machinery, the current value of which, defined by the value measured at the $j^{th}$ repetition, will be indicated $Zj$ and the estimated value (using the Kriging technique) at the $j^{th}$ repetition will be indicated $\hat{Z}_j$.

In detail, this monitored operating quantity is a parameter of an electrical signal which is indicative of the intensity of the vibrations of the monitored machinery and which is generated by a sensor coupled to the machinery itself.

For example, the monitored operating quantity could be the amplitude (peak-to-peak, RMS, effective) of the electrical signal, the amplitude or the amplitude-and-phase of harmonic components of the electrical signal, the amplitude and the phase of synchronous components (harmonic and sub-harmonic) of the motion of points on the line of the axis of the machinery, derived by processing the electrical signal, the amplitude and phase of the "generating vector" relating to synchronous components of the motion of the line of the axis, derived from processing the electrical signal, the amplitude of the principal axis and the angle (with respect to the reference system used) of the ellipses representative of the motion of the point of the shaft derived starting from synchronous components (harmonic or sub-harmonic).

The first embodiment of the present method is based on the assumption that the said amplitudes will always have values greater than zero and that the phase, possibly after being pre-treated, will lie between 0° and 360° or between 0 and $2\pi$

The trend analysis (difference between experimentally measured data and estimates thereof made with the Kriging technique) is performed at the $j^{th}$ repetition starting from the error defined by the following expression:

$$err_j\% = \frac{Z_j - \hat{Z}_j}{Z_j} \cdot 100$$

It is to be remembered that the estimation $\hat{Z}_j$ is a function of $k$ independent variables representative of the operating conditions of the monitored machinery.

It is therefore essential to ensure that correct estimations are available and to discriminate the measurements of the monitored operating quantity measured in the absence of defects (which go to increase the reference database from which the points for application of the Kriging are selected) from those measured in the presence of defects which are just evolving or which may evolve, which measurements are not introduced into the reference database but are organised in suitable vectors for use in the trend analysis and in the evaluation of the evolution of the monitored operating quantity.

As stated in relation to the amplitude of the monitored operating quantity (always greater than zero), the error $err_j\%$ is positive if the current value of the monitored operating quantity is greater than the estimated value, whilst it is negative if the current value is smaller than the estimated value.

For the formation of the reference database and the vector $err_j\%$ an indicator C is utilised which, at the $j^{th}$ repetition, can have the values indicated below:

- $C_j$=0: the estimation is accepted and the reference database is incremented with the current measurement;
- $C_j$=1: the estimation is not accepted and the reference database is incremented with the current measurement;
- $C_j$=2: the estimation is accepted but the reference database is not incremented with the current measurement;
- $C_j$=3: the estimation is not made in that the reference database is empty or contains at most one measurement (remember that the estimation can be made if at least two measurements are available);
- $C_j$=4: machine in "standby" (rotating but not delivering power).

Therefore the measurements constituting the reference database are again defined by $C_j$=0 and $C_j$=1.

As illustrated in Figure 1, initially the process starts at a block 100 in which the current value $Z_j$ of the monitored operating quantity and the values $X_i$ of the variables representing the operating conditions are detected (measured on the machinery).

From block 100 it then passes to block 110 in which the estimated value $\hat{Z}_j$ of the monitored operating quantity is calculated by means of the Kriging technique. In particular, in a first aspect of the present invention, the estimated value $\hat{Z}_j$ is calculated in block 110 by assuming that the local trend of the values of the monitored operating quantity is linear ("linear local drift"), that is the estimated value $\hat{Z}_j$ is calculated utilising formula 1.

From block 110 it then passes to block 120 in which a counter I is initialised (for example by putting it equal to 1) the significance of which will be clarified hereinafter.

From block 120 it then passes to a block 130 which checks whether the estimated values $\hat{Z}_j$ of the monitored operating quantity is greater than or equal to zero.

If the estimated value $\hat{Z}_j$ is greater than or equal to zero (output YES from block 130) it then goes to a block 140, otherwise if the estimated value $\hat{Z}_j$ is less than zero (output NO from block 130) it then passes to a block 150 in which operations for checking the functionality of the measurement lines and the calculator which makes the estimation are performed in that, as previously stated, the amplitude of the monitored operating quantity can only be greater than or equal to zero.

Then, using equation 3), the error $err_j\%$ between the current value $Z_j$ and the estimated value $\hat{Z}_j$ of the monitored operating quantity (calculated utilising the above indicated formula) is calculated in block 140.

From block 140 it then moves on to a block 160 which checks to see if the error $err_j\%$ lies within a predetermined range of values representative of acceptable values of the error and defined by a predetermined minimum and maximum value indicated $\varepsilon_1$ and $\varepsilon_2$ respectively.

If the error $err_j\%$ lies in the said predetermined range of values, that is if $\varepsilon_1 \leq err\% \leq \varepsilon_2$ (output YES from block 160) then it moves on to a block 170, otherwise if the error $err_j\%$ is outside the said predetermined range of values (output NO from block 160) then it moves onto a block 180.

In block 170 the current value $Z_j$ of the monitored operating quantity is accepted and introduced into the reference database, the estimated value $\hat{Z}_j$ of the monitored operating quantity is accepted, the calculated error $err_j\%$ is inserted into a relative error vector and the indicator $C_j$ relating to the formation of the reference database is put equal to zero.

From block 170 it then moves onto a block 260 described below.

In block 180 the counter $I$ is incremented by one unit and from block 180 it then moves on to a block 190 in which it is checked to see if the counter $I$ has a value less than or equal to a predetermined value, in the example under consideration 2.

In particular the predetermined value with which the value of the counter $I$ is compared is the value to which the counter $I$ was initialised in the block 120 increased by one unit.

If the counter $I$ has a value less than or equal to 2 (output YES from block 190) then it moves onto a block 200 otherwise if the counter $I$ has a value greater than 2 (output NO from block 190) then it moves onto a block 210.

In block 200 the estimated value $\hat{Z}_j$ of the monitored operating quantity is recalculated by means of the Kriging technique. In particular, according to a second aspect of the present invention, in block 200 the estimated value $\hat{Z}_j$ is calculated by assuming that the local trend of the values assumed by the monitored operating quantity is constant ("constant local drift") that is the calculation of the estimated value $\hat{Z}_j$ is performed utilising formula 2.

From block 200 it then moves back to block 130 to test if the estimated value $\hat{Z}_j$ is greater than or equal to zero and the operations described with reference to block 140-190 are then repeated.

It is useful to emphasise that the fact that the predetermined value with which the value of the counter $I$ is compared is the value to which the counter $I$ itself was initialised in block 120 increased by one unit has the purpose of allowing the repetition, but only once, of the calculation of the estimated value $\hat{Z}_j$ of the monitored operating quantity assuming, however, contrary to what has been done previously, that the local trend of the values of the monitored operating quantity is constant rather than linear.

In particular, by repeating the operations described in blocks 140-190 utilising the estimated value $\hat{Z}_j$ of the monitored operating quantity calculated assuming that the local trend of the values of the monitored operating quantity is constant, if the error $err_j\%$ lies in the said predetermined range of values (output YES from block 160) then it again moves onto 170 in which the current value $Z_j$ of the monitored operating quantity is accepted and introduced into the reference database, the estimated value $\hat{Z}_j$ of the monitored operating quantity is accepted, the calculated error $err_j\%$ is inserted into the associated vector and the indicator $C_J$ relating to the formation of the reference database is put equal to zero.

If on the other hand upon repeating the operations described in block 140-190 the error $err_j\%$ is outside the said predetermined range of values (output NO from block 160) then it moves on again to block 180 in which the counter $I$ is incremented by one unit.

Thus, from block 180 it moves onto block 190 in which it again tests if the value of the counter is greater than 2.

This value now being equal to 3, from block 190 it then moves (output NO) to block 210 in which it is tested if the current value $Z_j$ of the monitored operating quantity is less than or equal to the current values $Z_1, Z_2, .... Z_{J-1}$ of the monitored operating quantity in the preceding repetitions, that is it tests if:

$$Z_j \leq Z_M$$

in which

$$Z_M = max(Z_1, Z_2, ..., Z_{j-1})$$

If $Z_j$ is less than or equal to $Z_M$ (output YES from block 210) then it moved onto block 220, otherwise if $Z_j$ is greater than $Z_M$ (Output NO from block 210) then it moves onto block 230.

In block 220 the current value $Z_j$ is accepted and inserted into the reference database, the estimated value $\hat{Z}_j$ is refused, the error $err_j\%$ is put equal to zero, inserted into the associated error-vector and will not be considered in the trend analysis, and the indicator $C_j$ relating to the formation of the reference database is put equal to 1.

From block 220 it then passes to a block 260 described hereinafter.

Block 230 tests if the current value $Z_j$ of the monitored operating quantity is greater than or equal to a predetermined threshold value $Z_0$ representative of an acceptance limit value.

If $Z_j$ is greater than or equal to the predetermined threshold value $Z_0$ (output YES from block 230) then it moves onto a block 240, otherwise if $Z_j$ is less than the predetermined threshold value $Z_0$ (output NO from block 230) then it moves on to block 250.

In block 240 the exceeding of the threshold value $Z_0$ is signalled and from 240 it then moves on to block 250.

In block 250 the current value $Z_j$ is accepted but not inserted into the reference database, the estimated value $\hat{Z}_j$ is accepted, the error $err_j$ % is inserted into the associated error vector and the indicator $C_j$ relating to the formation of the reference database it put equal to 2.

From block 250 it then moves on to a block 260 in which an external command is expected, for example provided by an operator, indicative of the desire to perform a trend analysis.

If it is desired to perform a trend analysis (output YES from block 260) then it moves on to block 270 in which a trend analysis by means of the Kriging technique is performed; this analysis, performed for the purpose of identifying the onset of possible defects and/or malfunctions and to follow their evolution, is performed by utilising the error vector $err_j$% the terms of which are identified by the indicator $C=0$ and/or $C=2$.

If on the other hand it is not desired to perform a trend analysis (output NO from block 260) then it moves on to block 280 in which a further external command is expected indicative of the desire to perform a diagnostic operation on the monitored machinery.

If it is desired to perform a diagnostic operation (output YES from block 280) then it moves on to a block 290 in which diagnostic operations are performed which are not described in that they do not form part of the present invention, otherwise if it is not desired to perform a diagnostic operation (output NO from block 280) then it moves back to block 100 and the operations described in blocks 100-280 are repeated.

It is useful to repeat again some of the practical considerations which can contribute to the improvement of the results obtainable.

As previously stated, the estimated value $\hat{Z}_j$ of the monitored operating quantity is a function of $K$ independent variables representative of the operating conditions of the monitored machinery.

Experimental tests have demonstrated that with the number of independent variables lying between 1 and 5 reliable results can be obtained, but this number can be extended even up to 10.

Moreover, the reference database is constituted by all the current (measured) values $Z_j$ of the observed variable and by the corresponding operating conditions (independent variables) of the machinery. The reference database is built up over time, starting from the first current value acquired by utilising those current values answering to the above-described criteria.

Therefore, the accumulation of current values (during the course of the monitoring period) makes it possible to perform a division of the reference database itself into "homogeneous" subsets of operating conditions for the purposes of increasing the precision of the estimations and reducing the calculation times.

Experimental tests have demonstrated that with 6 subsets it is possible to obtain an optimum compromise between the increase in precision of the estimations and reduction in the calculation times.

In particular, since the variable operating quantities have sign, for example the reaction power of the machinery, the reference database can conveniently be divided into subsets which take account of the sign of the monitored operating quantity. In the considered example of reactive power. The database is preferably divided into two subsets which take account of the sign of one of the independent variables (inductive or capacitive reactive power).

As far as the acceptance limits of the error $err_j$% are concerned, experimental tests have demonstrated that an error lying between 5% and 25% makes it possible to obtain optimum monitoring results.

As stated above, the estimated value $\hat{Z}_j$ of the monitored operating quantity is calculated by utilising Kriging as interpolator; for the said calculation it is assumed that the trend of the monitored operating quantity is linear ("linear local drift") and in the case of an unsuccessful attempt with respect to the limits set the estimated values $\hat{Z}_j$ is calculated again assuming that the trend in the monitored operating quantity is constant ("constant local drift"); therefore the model developed utilises a double Kriging model to perform the estimation.

Experimental tests have demonstrated that good estimation results can be obtained by utilising between 20 and 40 points close to the point under examination for the calculation of interpolation co-efficients (and therefore for the estimation of a measurement) lying between 20 and 40.

By means of the these experimental tests it has been demonstrated that if the measurement error in the monitored operating quantity is taken into account it is convenient for the coefficient $A_0$ to have a value less than or equal to 0.02.

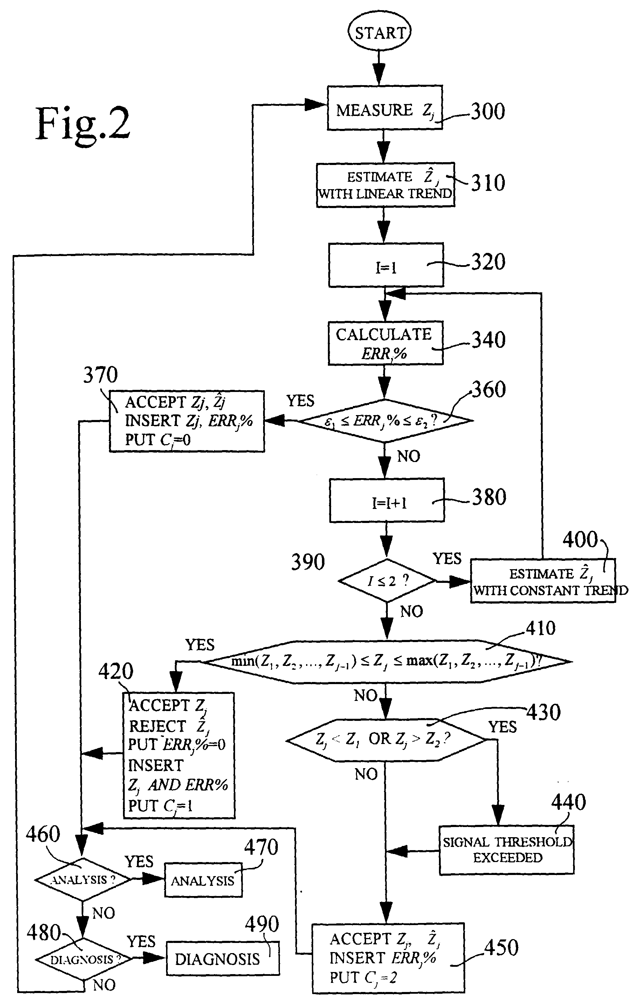

In Figure 2 there is shown a flow diagram of operations relating to a second embodiment of the method for evaluating the reliability of the trend analysis performed with the Kriging technique forming the subject of the present invention.

In this second embodiment, the real component and the imaginary component of the electrical signal generated by the sensor is taken into consideration as the monitored operating quantity, these being of positive and negative value, or else the amplitude and phase of the electrical signal are used, in which case it is assumed that the amplitude can have any positive or negative value and the phase lies between -180° and +180°

In a manner similar to the first embodiment, the trend analysis is performed starting from the error defined in expression 3).

The flow diagram of Figure 2 is very similar to the flow diagram of Figure 1 and for this reason only those parts which differ from the flow diagram of Figure 1 will be described in detail.

As illustrated in Figure 2, initially it leads to a block 300 in which the current value $Z_j$ of the monitored operating quantity (measured on the machinery) and the values $X_i$ of the variables representing the operating condition are detected.

From block 300 it then moves onto block 310 in which, by means of the Kriging technique, the estimated value $\hat{Z}_j$ of the monitored operating quantity is calculated. In a manner similar to that described for the first embodiment, in block 310 the estimated value $\hat{Z}_j$ is calculated assuming that the local trend of the values of the monitored operating quantity is linear ("linear local drift").

From block 310 it then passes to block 320 in which the counter $I$ is initialised (for example by putting it equal to 1) the significance of which is the same as that previously described.

From block 320 it then passes to a block 340 in which the error $err_j\%$ between the current value $Z_j$ and the estimated value $\hat{Z}_j$ of the monitored operating quantity, estimated utilising the above indicated formula, is calculated utilising equation 3).

From the assumptions made (the values which the monitored operating quantities can take being both positive and negative) and different from the first embodiment there is here no test for whether the estimated value $\hat{Z}_j$ of the monitored operating quantity is greater than or equal to zero.

From block 340 it then passes to a block 360 in which it is tested whether the error $err_j\%$ lies in a predetermined range of values representative of acceptable values of the error defined by predetermined minimum and maximum values indicated $\varepsilon_3$ and $\varepsilon_4$ respectively.

If the error $err_j\%$ lies in the said predetermined range of values, that is if $\varepsilon_3 \le err\% \le \varepsilon_4$ (output YES from block 360) then it passes to a block 370, otherwise if the error $err_j\%$ is outside the said predetermined range of values (output NO from block 360) then it passes to a block 380.

In block 370 the current value $Z_j$ of the monitored operating quantity is accepted and inserted into the reference database, the estimated value $\hat{Z}_j$ of the monitored operating quantity is accepted, the calculated error $err_j\%$ is inserted into the associated error vector and the indicator $C_j$ relating to the formation of the reference database is set equal to zero.

From block 370 it then passes to a block 460 described hereinafter.

In block 380 the counter $I$ is incremented by one unit and from block 380 it then passes to a block 390 in which it is tested whether the counter $I$ has a value less than or equal to 2.

If the counter has a value less than or equal to 2 (output YES from 390) it then passes to a block 400, otherwise if the counter $I$ has a value greater than 2 (output NO) from block 390 then it passes to a block 410.

In the block 400 the estimated value $\hat{Z}_j$ of the monitored operating quantity is re-calculated by means of the Kriging technique assuming that the local trend of the values of the monitored operating quantity is constant ("constant local drift").

From block 400 it then passes back to block 340 for calculation of the error $err_j\%$ and the operations described with reference to blocks 360-390 are then repeated.

In particular, upon repeating the operations described in relation to blocks 360-390 utilising the estimated value $\hat{Z}_j$ of the monitored operating quantity calculated assuming that the local trend of the values of the monitored operating quantity is constant, if the error $err_j\%$ lies in the said predetermined range of values (output YES from block 360) then it returns again to block 370 in which the current value $Z_j$ of the monitored operating quantity is accepted and inserted into the reference database, the estimated value $\hat{Z}_j$ of the monitored operating quantity is accepted, the calculated error $err_j\%$ is inserted into the related vector and the indicator $C_j$ relating to the formation of the reference database is set equal to zero.

If on the other hand upon repeating the described operation in blocks 360-390 the error $err_j\%$ lies outside the said predetermined range of values (output NO from block 360) then it returns again to block 380 in which the counter $I$ is incremented by one unit.

Therefore, from block 380 it passes to block 390 in which it is again checked whether the value of the counter $I$ is greater than 2.

This value now being equal to 3, it then passes from block 390 (output NO) to block 410 in which it is tested whether the current value $Z_j$ of the monitored operating quantity lies in a predetermined range of values defined by a minimum value and a maximum value respectively equal to the minimum and the maximum of the current values $Z_j$ of the monitored operating quantity in the preceding repetitions, that is it is checked:

$$Z_m \leq Z_j \leq Z_M$$

in which:

$$Z_M = min(Z_1, Z_2, ..., Z_{j-1})$$

$$Z_M = max(Z_1, Z_2, ..., Z_{j-1})$$

If $Z_j$ lies in the said predetermined range of values (output YES from block 410) then it moves onto block 420, otherwise if $Z_j$ is outside the said predetermined range of values (output NO from block 410) then it moves onto a block 430.

In block 420 the current value $Z_j$ is accepted and inserted into the reference database, the estimated value $\hat{Z}_j$ is refused, the error $err_j\%$ is set equal to zero, is inserted into the associated error vector and will not be considered in the trend analysis, and the indicator $C_j$ relating to the formation of the reference database is set equal to 1.

From block 420 it then passes to a block 460 described hereinbelow.

In block 430 it is checked whether the current value $Z_j$ of the monitored operating quantity is outside a predetermined range of values defined by a predetermined minimum value $Z_1$ and maximum value $Z_2$ respectively representative of lower and upper acceptance limits.

If $Z_j$ is outside the said predetermined range of values, that is if $Z_j$ is less than $Z_1$ or $Z_j$ is greater than $Z_2$ (output YES from block 430) then it moves onto block 440, otherwise if $Z_j$ lies in the said predetermined range of values (output NO from block 430) then it moves onto block 450.

In block 440 it is signalled that the threshold value $Z_1$ or $Z_2$ is exceeded and from 440 it moves on then to block 450.

In block 450 the current value $Z_j$ is accepted but not inserted into the reference database, the estimated value $\hat{Z}_j$ is accepted, the error $err_j\%$ is inserted into the associated error vector and the indicator $C_j$ relating to the formation of the reference database is set equal to 2.

From block 450 it then passes to a block 460 in which an external command is awaited, for example provided by an operator, indicative of the desire to perform a trend analysis.

If it is desired to perform a trend analysis (output YES from block 460) then it moves on to block 470 in which a trend analysis by means of the Kriging technique is performed, otherwise if it is not desired to perform a trend analysis (output NO from block 460) then it moves on to a block 480 in which a further external command indicative of the desire to perform a diagnostic operation on the monitored machinery is expected.

If it is desired to perform a diagnostic operation (output YES from block 480) then it moves onto a block 490 in which diagnostic operations not described in that they do not form part of the present invention are performed, otherwise if it is not desired to perform a diagnostic operation (output NO from 480) then it moves back to block 300 and the operations described in blocks 300-480 are then repeated.

Finally, it is clear that the evaluation method described and illustrated here can have modifications and variations introduced thereto without by this departing from the protective ambit of the present invention.

## Claims

1.  A method of evaluating the reliability of a trend analysis performed by means of the Kriging technique on an operating quantity of machinery indicative of the presence of defects in the machinery itself, characterising that it comprises the steps of :

    a) acquiring (100;300) a current value ($Z_j$) of the said operating quantity;
    b) calculating (110;310) a first estimated value ($\hat{Z}_j$) of the said operating quantity by means of the said Kriging technique assuming that the local trend of the values of the said operating quantity is linear;
    c) calculating (140;340) a first error value ($err_j\%$) on the basis of the said current value ($Z_j$) and the said first

estimated value ($\hat{Z}_j$) of the said operating quantities;

d) comparing (160;360) the said first error value ($err_j\%$) with at least one first predetermined threshold value ($\varepsilon_1$, $\varepsilon_2$);

e) accepting (170;370) the said first estimated value ($\hat{Z}_j$) of the said operating quantity whenever the said first error value ($err_j\%$) has a first predetermined relationship with the said first predetermined threshold value ($\varepsilon_1$, $\varepsilon_2$);

f) calculating (200;400) a second estimated value ($\hat{Z}_j$) of the said operating quantity by means of the said Kriging technique assuming that the local trend of the values of the said operating quantity is constant whenever the said first error value ($err_j\%$) does not have the said first predetermined relationship with the said first predetermined threshold value ($\varepsilon_1$, $\varepsilon_2$);

g) calculating (140;340) a second error value ($err_j\%$) on the basis of the said current value ($Z_j$) and the said second estimated value ($\hat{Z}_j$) of the said operating quantity;

h) comparing (160;360) the said second error value ($err_j\%$) with at least one second predetermined threshold value ($\varepsilon_1$, $\varepsilon_2$);

i) accepting (170;370) the said second estimated value ($\hat{Z}_j$) of the said operating quantity whenever the said second error value ($err_j\%$) has a second predetermined relationship with the said second predetermined threshold value ($\varepsilon_1$, $\varepsilon_2$);

2. A method according to Claim 1, characterised in that the said step d) comprises the step of comparing (160;360) the said first error value ($err_j\%$) with the first predetermined range of values ($\varepsilon_1$, $\varepsilon_2$);

in that the said step e) comprises the steps of:
e1) accepting (170;370) a said first estimated value ($\hat{Z}_j$) whenever the said first error value *(err $_j\%$)* has a third predetermined relationship with the said first predetermined range of values ($\varepsilon_1$, $\varepsilon_2$);
in that the said step f) comprises the steps of:
f1) calculating (200;400) the said second estimated value ($\hat{Z}_j$) of the said operating quantity by means of the Kriging technique assuming that the local trend of the values of the said operating quantity is constant whenever the said first error value ($err_j\%$) does not have the said third predetermined relationship with the said first predetermined range of values ($\varepsilon_1$, $\varepsilon_2$).

3. A method according to Claim 2, characterised in that the said step e1) includes the step of accepting (170;370) the said first estimated value ($\hat{Z}_j$) whenever the said first error value ($err_j\%$) lies in the said first predetermined range of values ($\varepsilon_1$, $\varepsilon_2$) and in that the said step f1) includes the step of calculating (200;400) the said second estimated value ($\hat{Z}_j$) of the said operating quantity by means of the said Kriging technique assuming that the local trend of values of the said operating quantity is constant whenever the said first error value ($err_j\%$) lies outside the said first predetermined range of values ($\varepsilon_1$, $\varepsilon_2$).

4. A method according to Claim 2 or Claim 3, characterised in that the said step h) includes the step of comparing (160;370) a said second error value ($err_j\%$) with a second predetermined range of values ($\varepsilon_1$, $\varepsilon_2$), and

in that the said step i) includes the step of:
i1) accepting (170;370) the said second estimated value ($\hat{Z}_j$) whenever the said second error value ($err_j\%$) has a fourth predetermined relationship with the said second predetermined range of values ($\varepsilon_1$, $\varepsilon_2$).

5. A method according to Claim 4 characterised in that the said step i1) includes the step of accepting (170;370) the said second estimated value ($\hat{Z}_j$) whenever the said second error value ($err_j\%$) lies in the said second predetermined range of values ($\varepsilon_1$, $\varepsilon_2$).

6. A method according to Claim 4 or Claim 5, characterised in that the said first predetermined range of value ($\varepsilon_1$, $\varepsilon_2$) and the said second predetermined range of values ($\varepsilon_1$, $\varepsilon_2$) are the same as one another.

7. A method according to any of Claims from 1-6, characterised in that it includes, before the said step c), the step of :

k) comparing (130) the said first estimated value ($\hat{Z}_j$) of the said operating quantity with a third predetermined threshold value;
the said step c) being performed whenever the said first estimated value ($\hat{Z}_j$) has a fifth predetermined relationship with the said third predtermined threshold value.

**8.** A method according to Claim 7, characterised in that the said step c) is performed whenever the said first estimated value ($\hat{Z}_j$) is greater than or equal to the said third predetermined threshold value.

**9.** A method according to Claim 7 or Claim 8 characterised in that the said step c) is performed whenever the said first estimated value ($\hat{Z}_j$) is greater than or equal to zero.

**10.** A method according to any preceding claim, characterised in that it further includes the steps of:

m) comparing (210;410) the said current values ($Z_j$) of the said operating quantity with at least a fourth predetermined threshold value ($Z_m, Z_M$) whenever the said second error value ($err_j\%$) does not have the said second predetermined relationship with the said second predetermined threshold value ($\varepsilon_1$, $\varepsilon_2$);

p) rejecting (220;420) the said second estimated value ($\hat{\hat{Z}}_j$) of the said operating quantity whenever the said current value ($Z_j$) has a sixth predetermined relationship with the said fourth predetermined threshold value ($Z_m, Z_M$).

**11.** A method according to Claim 10, characterised in that the said step p) includes the step of rejecting (220;420) the said second estimated value ($\hat{\hat{Z}}_j$) whenever the said current value ($Z_j$) is less than or equal to the said fourth predetermined threshold value ($Z_m, Z_M$).

**12.** A method according to Claim 10 or Claim 11, characterised in that it further includes the step of repeating said steps from a) to p) to obtain a plurality j) of the said current values ($Z_j$) and of the said first and second estimated value ($\hat{Z}_j$) of the said operating quantity and in that in each of the said repetitions the said fourth predetermined threshold value ($Z_M$) is equal to the greatest of the current values ($Z_j$) of the said operating quantity in the preceding repetition.

**13.** A method according to Claim 10, characterised in that the said step m) includes the step of:

m1) comparing (410) the said current value ($Z_j$) of the said operating quantity with a third predetermined range of values ($Z_m, Z_M$);

in that the said step p) includes the step of:

p1) rejecting (420) the said second estimated value ($\hat{\hat{Z}}_j$) of the said operating quantity whenever the said current value ($Z_j$) has a sixth predetermined relationship with the said third predetermined range of values ($Z_m, Z_M$).

**14.** A method according to Claim 13, characterised in that the said step p1) comprises the step of rejecting (420) the said second estimated value ($\hat{\hat{Z}}_j$) of the said operating quantity whenever the said current value ($Z_j$) lies in the said third predetermined range of values ($Z_m, Z_M$).

**15.** A method according to Claim 13 or Claim 14, characterised in that it includes the step of repeating the said steps from a) to p) to obtain a plurality (j) of the said current values ($Z_j$) and of the said first and second estimated values ($\hat{Z}_j$) of the said operating quantity and in that the said third predetermined range of values ($Z_m, Z_M$) is defined by a first ($Z_m$) and a second ($Z_M$) end value equal, in each of the said repetitions, to the smallest and the largest, respectively, of the current values ($Z_j$) of the said operating quantity in the preceding repetitions.

**16.** A method according to any of Claims from 10 to 15, characterised in that it further includes the step of:

r) accepting (250;450) the said second estimated values ($\hat{\hat{Z}}_j$) of the said operating quantity whenever the said current value ($Z_j$) does not have the said seventh predetermined relationship with the said fourth predetermined threshold value ($Z_m, Z_M$).

**17.** A method according to Claim 15, characterised in that it further includes, before the said step r), the steps of:

s) comparing (230;430) the said current value ($Z_j$) with at least a fifth predetermined threshold value ($Z_0$); and

t) signalling (240;440) that the threshold is exceeded whenever the said current value ($Z_j$) has an eighth predetermined relationship with the said fifth predetermined threshold value ($Z_0$).

**18.** A method according to Claim 17, characterised in that the said step t) includes the step of signalling (240;440) that the threshold is exceeded whenever the said current value ($Z_j$) is greater than the fifth predetermined threshold value ($Z_0$).

19. A method according to Claim 17, characterised in that the said step s) includes the step of:

   s1) comparing (430) the said current value ($Z_j$) with a fourth predetermined range of values ($Z_1,Z_2$); and in that the said step t) includes the step of:
   t1) signalling (440) that the threshold is exceeded whenever the said current value ($Z_j$) has a ninth predetermined relationship with the said fourth predetermined range of values ($Z_1,Z_2$).

20. A method according to Claim 19, characterised in that the said step t1) includes the step of signalling (440) that the threshold is exceeded whenever the said current value ($Z_j$) is outside the said fourth predetermined range of values ($Z_1,Z_2$).

21. A method according to any preceding claim, characterised in that it further includes, after the said step e), the steps of:

   u1) accepting (170;370) the said current values ($Z_j$) of the said operating quantity whenever the said first error value ($err_j\%$) has the said first predetermined relationship with the said first predetermined threshold value ($\varepsilon_1$, $\varepsilon_2$);
   u2) inserting (170;370) the said current value ($Z_j$) of the said operating quantity into a reference database; and
   U3) inserting (170;370) the said first error value ($err_j\%$) into an error vector.

22. A method according to Claim 21, characterised in that it further includes, after the said phases u1), u2), and u3), the step of associating (170;370) a first predetermined identification value ($C_j$) to the said current value ($Z_j$) of the said operating quantity and to the said first error value ($err_j\%$).

23. A method according to any preceding claim, characterised in that it further includes, after the said step l), the steps of :

   v1) accepting (170;370) the said current value ($Z_j$) of the said operating quantity whenever the said second error value ($err_j\%$) has the said second predetermined relationship with the said second predetermined threshold value ($\varepsilon_1$, $\varepsilon_2$);
   v2) inserting (170;370) the said current values ($Z_j$) of the said operating quantity into a reference database; and
   v3) inserting (170;370) the said second error value ($err_j\%$) into an error vector.

24. A method according to Claim 23, characterised in that it further includes, after the said steps v1), v2), and v3), the step of associating (170;370) a second predetermined identification value ($C_j$) to the said current value ($Z_j$) of the said operating quantity and to the said second error value ($err_j\%$).

25. A method according to any of Claims from 10 to 15, characterised in that it further includes, after the said step p), the steps of:

   w1) accepting (220;420) the said current value ($Z_j$) of the said operating quantity whenever the said current value ($Z_j$) has the said sixth predetermined relationship with the said fourth predetermined threshold value ($Z_m,Z_M$);
   w2) inserting (220;420) the said current value ($Z_j$) of the said operating quantity into a reference database;
   w3) setting the said second error value ($err_j\%$) to zero; and
   w4) inserting (220;420) the said second error value ($err_j\%$) into an error vector.

26. A method according to Claim 25, characterised in that it further includes, after the said steps w1) and w2) the step of associating (220;420) a third predetermined identification value ($C_j$) to the said current values ($Z_j$) of the said operating quantity and to the said second error value ($err_j\%$).

27. A method according to any of Claim from 16 to 20, characterised in that it further includes, after the said step r), the step of:

   z1) accepting (250;450) the said current value ($Z_j$) of the said operating quantity whenever the said current value ($Z_j$) does not have the said seventh predetermined relationship with the said fourth predetermined threshold value ($Z_m$, $Z_M$); and

z2) inserting (250;450) the said second error value ($err_j$%) in an error vector.

28. A method according to Claim 27, characterised in that it further includes, after the said steps z1) and z2), the step of associating (250;450) a fourth predetermined identification value ($C_j$) to the said current value ($Z_j$) of the said operating quantity and to the said second error value ($err_j$%).

# Fig.1

```
                              ( START )
                                  │
                                  ▼
                    ┌──────────────────────┐
          ┌────────▶│   MEASURE  Zⱼ         │──── 100
          │         └──────────────────────┘
          │                     │
          │                     ▼
          │         ┌──────────────────────┐
          │         │   ESTIMATE Ẑⱼ         │──── 110
          │         │   WITH LINEAR TREND   │
          │         └──────────────────────┘
          │                     │
          │                     ▼
          │         ┌──────────────────────┐
          │         │        I=1           │──── 120
          │         └──────────────────────┘
          │                     │
   150    │                     ▼
┌──────────┐       NO      ◇─── 130
│ VERIFY   │◀──────────────◇ Ẑⱼ ≥ 0 ? ◇
│FUNCTIONING│              ◇─────◇
└──────────┘                     │ YES
                                 ▼
                    ┌──────────────────────┐
                    │    CALCULATE         │──── 140
                    │    ERRⱼ%             │
  170               └──────────────────────┘
┌──────────────┐            │
│ ACCEPT Zj, Ẑj│   YES      ▼
│ INSERT Zj, ERRⱼ%│◀──── ◇ ε₁ ≤ ERRⱼ% ≤ ε₂ ? ◇──── 160
│ PUT Cⱼ=0     │            │ NO
└──────────────┘            ▼
                    ┌──────────────────────┐
                    │      I=I+1           │──── 180
                    └──────────────────────┘
  220                        │
┌──────────────┐    190      ▼      YES    ┌──────────────────────┐
│ ACCEPT Zⱼ    │          ◇ I ≤ 2 ? ◇─────▶│   ESTIMATE  Ẑⱼ       │──── 200
│ REJECT Ẑⱼ    │ YES       │               │  WITH CONSTANT TREND │
│ PUT ERRⱼ%=0  │◀──────    │ NO            └──────────────────────┘
│ INSERT       │      ◇─── 210
│ Zⱼ AND ERR%  │◀────◇ Zⱼ ≤ max(Z₁, Z₂, ..., Zⱼ₋₁) ? ◇
│ PUT Cⱼ=1     │           │
└──────────────┘           │ NO
                           ▼
  260              ◇─── 230
   ◇ ANALYSIS ? ◇   ◇ Zⱼ > Z₀ ? ◇─── YES ──┐
   ◇─────◇  YES     ◇─────◇               ▼
     │    └──▶ ┌──────────┐   NO    ┌──────────────────┐
     │ NO      │ ANALYSIS │── 270   │ SIGNAL THRESHOLD │──── 240
  280│         └──────────┘         │ EXCEEDED         │
   ◇ DIAGNOSIS? ◇  YES              └──────────────────┘
   ◇─────◇   └──▶ ┌──────────┐              │
     │ NO         │DIAGNOSIS │── 290   ┌──────────────────┐
     │            └──────────┘         │ ACCEPT Zⱼ, Ẑⱼ    │
                                       │ INSERT ERRⱼ%     │──── 250
                                       │ PUT Cⱼ=2         │
                                       └──────────────────┘
```

# Fig.2

START

MEASURE $Z_j$ —300

ESTIMATE $\hat{Z}_j$ WITH LINEAR TREND —310

I=1 —320

CALCULATE $ERR_j\%$ —340

370
ACCEPT $Z_j$, $\hat{Z}_j$
INSERT $Z_j$, $ERR_j\%$
PUT $C_j$=0

YES ← 360 $\varepsilon_1 \leq ERR_j\% \leq \varepsilon_2$ ?

NO

I=I+1 —380

390 $I \leq 2$ ? — YES → 400 ESTIMATE $\hat{Z}_j$ WITH CONSTANT TREND

NO

410 $\min(Z_1, Z_2, ..., Z_{j-1}) \leq Z_j \leq \max(Z_1, Z_2, ..., Z_{j-1})$?

YES

420
ACCEPT $Z_j$
REJECT $\hat{Z}_j$
PUT $ERR_j\%$=0
INSERT $Z_j$ AND $ERR\%$
PUT $C_j$=1

NO

430 $Z_j < Z_1$ OR $Z_j > Z_2$ ? — YES

NO

440 SIGNAL THRESHOLD EXCEEDED

460 ANALYSIS ? — YES → 470 ANALYSIS

NO

480 DIAGNOSIS ? — YES → 490 DIAGNOSIS

NO

450 ACCEPT $Z_j$, $\hat{Z}_j$ INSERT $ERR_j\%$ PUT $C_j$=2